(19) **Europäisches Patentamt**
**European Patent Office**
**Office européen des brevets**

(11) **EP 3 892 976 B1**

(12) **FASCICULE DE BREVET EUROPEEN**

(45) Date de publication et mention
de la délivrance du brevet:
**08.03.2023 Bulletin 2023/10**

(21) Numéro de dépôt: **21166852.0**

(22) Date de dépôt: **02.04.2021**

(51) Classification Internationale des Brevets (IPC):
**G01M 3/24** (2006.01)     **F17D 5/06** (2006.01)
**G01F 1/66** (2006.01)

(52) Classification Coopérative des Brevets (CPC):
**G01F 1/666; F17D 5/06; G01M 3/243**

(54) **PROCEDE DE DETECTION ET DE LOCALISATION D'UNE FUITE DE FLUIDE**

VERFAHREN ZUR ERKENNUNG UND LOKALISIERUNG EINES FLUIDLECKS

METHOD FOR DETECTING AND LOCATING A FLUID LEAK

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **09.04.2020 FR 2003584**

(43) Date de publication de la demande:
**13.10.2021 Bulletin 2021/41**

(73) Titulaire: **Sagemcom Energy & Telecom SAS**
**92500 Rueil-Malmaison (FR)**

(72) Inventeurs:
• **TEBOULLE, Henri**
**92500 Rueil Malmaison (FR)**
• **SABRAOUI, Abbas**
**92500 Rueil Malmaison (FR)**

(74) Mandataire: **Lavaud, Thomas et al**
**Cabinet Boettcher**
**16, rue Médéric**
**75017 Paris (FR)**

(56) Documents cités:
**EP-A2- 3 236 227          WO-A1-2017/005269
WO-A1-2019/240231      JP-A- 2006 349 572
KR-A- 20180 110 543    US-A1- 2019 128 767
US-A1- 2019 310 158**

## Description

L'invention concerne le domaine de la détection et de la localisation de fuite dans un réseau de distribution de fluide.

ARRIERE PLAN DE L'INVENTION

Les compteurs d'eau modernes, dits « communicants », remplacent progressivement les compteurs d'eau traditionnels.

Un compteur d'eau communicant permet bien sûr de mesurer la quantité d'eau consommée par l'installation d'un client pour facturer cette consommation au client. Un compteur d'eau communicant permet aussi de produire, de transmettre, de recevoir et d'analyser des données diverses (relatives par exemple à la consommation de l'installation, à l'état du réseau de distribution d'eau, ou bien au fonctionnement du compteur), de manière à mettre en oeuvre de nouvelles fonctionnalités. Ces nouvelles fonctionnalités bénéficient à la fois au distributeur d'eau, au gestionnaire du réseau et au client.

Un compteur d'eau communicant permet ainsi par exemple au client d'améliorer le suivi de sa consommation et donc de mieux la maîtriser, d'optimiser sa facturation, de ne pas être dérangé par les interventions des opérateurs grâce au relevé à distance, etc.

Il est envisagé d'utiliser les nouvelles capacités des compteurs d'eau communicants pour améliorer la détection et la localisation des fuites d'eau dans les réseaux de distribution d'eau.

Le document EP3236227 A2 divulgue un débitmètre à ultrasons utilisé pour détecter une fuite dans un réseau de fluides impliquant l'écoute du du bruit produit dans le tuyau et la mesure du débit dans le fluide avant d'écouter le bruit.

Le document WO2017/005269 A1 divulgue un débitmètre à ultrasons utilisé pour détecter une fuite dans un réseau de fluide, basé sur le niveau de bruit mesuré par l'un des transducteurs utilisés par le débitmètre à ultrasons.

L'invention a pour objet de détecter et de localiser de manière précise, fiable et peu coûteuse une fuite de fluide survenant dans un réseau de distribution de fluide.

RESUME DE L'INVENTION

En vue de la réalisation de ce but, on propose un procédé de détection et de localisation d'une fuite de fluide dans un réseau de distribution de fluide selon la revendication 1, le procédé comportant une pluralité de compteurs de fluide à ultrason comprenant chacun un transducteur amont situé du côté du réseau de distribution de fluide et un transducteur aval situé du côté d'une installation alimentée en fluide par ledit réseau de distribution de fluide, le procédé comportant les étapes, pour chaque compteur de fluide à ultrason, de :

- acquérir ou évaluer des niveaux de bruit associés chacun à une période de détection distincte, chaque niveau de bruit étant représentatif d'un niveau d'un signal de bruit de fuite contenu dans des échantillons de mesure issus de mesures réalisées par le transducteur dudit compteur de fluide à ultrason au cours de la période de détection associée ;
- comparer chaque niveau de bruit avec un seuil de bruit prédéterminé ;
- détecter une fuite de fluide à proximité du compteur de fluide à ultrason lorsqu'au moins un nombre prédéterminé de niveaux de bruit successifs supérieurs au seuil de bruit prédéterminé, correspondant à des périodes de détection espacées dans le temps d'au moins une durée prédéterminée, a été détecté ;

le procédé étant tel que les échantillons de mesure utilisés pour mettre en oeuvre ledit procédé comprennent des premiers échantillons de mesure qui sont issus de mesures réalisées par le transducteur aval dudit compteur de fluide à ultrason ou des deuxièmes échantillons de mesure qui sont issus de mesures réalisées par le transducteur amont dudit compteur de fluide à ultrason ou encore les premiers échantillons de mesure et les deuxièmes échantillons de mesure,
le procédé comprenant en outre l'étape, lorsque ledit procédé est mis en oeuvre avec les premiers échantillons de mesure et qu'une fuite est détectée, de localiser ladite fuite dans le réseau de distribution de fluide en amont dudit compteur de fluide à ultrason ou le procédé comprenant en outre l'étape, lorsque ledit procédé est mis en oeuvre avec les deuxièmes échantillons de mesure et qu'une fuite est détectée, de localiser ladite fuite dans ladite installation en aval dudit compteur de fluide à ultrason.

Le procédé de détection et de localisation selon l'invention utilise donc les niveaux de bruit contenus dans les mesures réalisées par les transducteurs des compteurs pour détecter et localiser une fuite d'eau.

Comme les réseaux de distribution de fluide comportent généralement un grand nombre de compteurs, le maillage de l'espace est relativement fin et la localisation de la fuite peut être réalisée de manière très précise.

Le procédé selon l'invention permet de distinguer une fuite, qui est un phénomène continu et durable, d'un bruit de pompe, qui est filtré et éliminé par le procédé. On améliore donc la fiabilité de la détection de fuite en réduisant le taux de fausses détections.

Le procédé selon l'invention peut être mis en oeuvre grâce au transducteur du compteur qui est utilisé par ailleurs pour réaliser les mesures de consommation du fluide. Il n'est donc pas nécessaire d'équiper les compteurs d'un transducteur dédié à la détection et à la localisation de fuite. La mise en oeuvre du procédé selon l'invention est donc peu coûteuse.

On propose de plus un procédé tel que précédemment décrit, dans lequel les périodes de détection sont définies de sorte que chaque période de détection succède directement à une période préliminaire de durée au moins égale à une durée prédéfinie, au cours de laquelle une consommation de fluide mesurée par le compteur de fluide à ultrason est nulle.

On propose de plus un procédé tel que précédemment décrit, dans lequel l'évaluation du niveau de bruit pour chaque période de détection comprend les étapes de :

- appliquer un filtrage numérique passe-bande sur les échantillons de mesure de ladite période de détection pour obtenir un signal de détection filtré comprenant des échantillons de mesure filtrés ;
- calculer une autocorrélation du signal de détection filtré.

On propose de plus un procédé tel que précédemment décrit, dans lequel le niveau de bruit sur la période de détection est évalué en utilisant la formule : $M = MAX\ selon\ k(\sum_{n=0}^{R} S_n \times S_{n-k})$ , où M est le niveau de bruit, $S_n$ est le $n^{ième}$ échantillon de mesure filtré, $S_{n-k}$ est le $(n-k)^{ième}$ échantillon de mesure filtré, et R est un nombre entier qui est inférieur ou égal au nombre d'échantillons de mesure de la période de détection.

On propose en outre un équipement comprenant un premier module de communication et un premier module de traitement agencé pour mettre en oeuvre le procédé qui vient d'être décrit.

On propose en outre un équipement tel que précédemment décrit, l'équipement étant un Système d'Information ou une passerelle ou un concentrateur de données ou un compteur communicant de quartier.

On propose en outre un programme d'ordinateur comprenant des instructions qui conduisent l'équipement précédemment décrit à exécuter les étapes du procédé qui vient d'être décrit.

On propose aussi un support d'enregistrement lisible par ordinateur, sur lequel est enregistré le programme d'ordinateur qui vient d'être décrit.

L'invention sera mieux comprise à la lumière de la description qui suit d'un mode de mise en oeuvre particulier non limitatif de l'invention.

BREVE DESCRIPTION DES DESSINS

Il sera fait référence aux dessins annexés, parmi lesquels :

[Fig. 1] la figure 1 représente un réseau de distribution d'eau dans lequel est mise en oeuvre l'invention ;
[Fig. 2] la figure 2 représente un compteur d'eau à ultrason du réseau de distribution d'eau.

DESCRIPTION DETAILLEE DE L'INVENTION

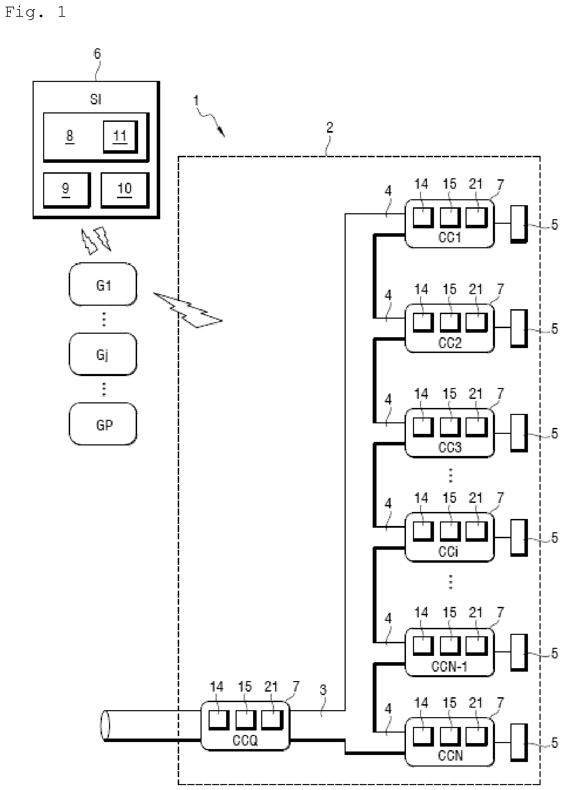

En référence à la figure 1, le procédé de détection et de localisation d'une fuite de fluide selon l'invention est ici mis en oeuvre dans un réseau de distribution d'eau 1 destiné à alimenter en eau un « quartier » 2, c'est-à-dire une zone géographique comprenant une pluralité d'installations d'eau situées chacune par exemple dans une habitation, un restaurant, un commerce, etc.

Le réseau de distribution d'eau 1 comporte un conduit principal 3 et des conduits secondaires 4 reliés chacun à une installation d'eau 5 distincte.

Le réseau de distribution d'eau 1 comporte de plus un Système d'Information (SI) 6 du gestionnaire du réseau de distribution d'eau, des passerelles Gj et des compteurs d'eau à ultrason 7.

Le SI 6 comprend un serveur d'application 8, un serveur LNS 9 (pour *LoRa Network Server*) et un premier module de communication 10.

Le serveur d'application 8 comporte un premier module de traitement 11 comportant au moins un premier composant de traitement adapté à exécuter des instructions d'un programme pour mettre en oeuvre certaines étapes du procédé de détection et de localisation d'une fuite d'eau qui vont être décrites ci-après. Le premier composant de traitement est par exemple un processeur, un microcontrôleur, ou bien un circuit logique programmable tel qu'un FPGA (pour *Field Programmable Gate Arrays*) ou un ASIC (pour *Application Spécifie Integrated Circuit*).

Le serveur LNS 9 est destiné notamment à gérer les communications avec l'ensemble des passerelles Gj et avec tous les compteurs d'eau 7 auxquels le serveur LNS 9 est connecté. Le serveur LNS 9 communique directement avec les passerelles Gj, et avec les compteurs d'eau 7 via les passerelles Gj. Le serveur LNS 9 utilise le premier module de communication 10, qui permet ici de mettre en oeuvre une communication radio transportant les trames du protocole LoRa, pour communiquer avec les passerelles Gj et les compteurs d'eau 7.

Les passerelles Gj, ou *gateways,* sont des passerelles LoRa. La variable j varie de 1 à P.

Les passerelles Gj comportent chacune un module de communication leur permettant de communiquer avec le serveur LNS via une communication radio transportant ici les trames du protocole LoRa.

Toutes les communications entre le SI 6 et les compteurs d'eau 7, montantes ou descendantes, transitent par les passerelles Gj.

Parmi les compteurs d'eau 7, on trouve ici un compteur d'eau principal CCQ (pour « Compteur d'eau Communicant de Quartier ») et des compteurs d'eau secondaires CCi (pour « Compteur d'eau Communicant »).

Le compteur d'eau principal CCQ est raccordé au conduit principal 3. Un compteur d'eau secondaire CCi (pour « Compteur d'eau Communicant ») distinct est raccordé à chaque conduit secondaire 4. La variable i varie de 1 à N, N étant le nombre de conduits secondaires 4 et donc de compteurs d'eau secondaires CCi.

Les conduits secondaires 4 sont issus du conduit principal 3, c'est-à-dire qu'ils sont tous connectés au conduit principal 3 en aval du compteur d'eau principal CCQ : le conduit principal 3 se divise, en aval du compteur d'eau principal CCQ, en un faisceau formé par les conduits secondaires 4.

Ici, par « en amont », on entend du côté du réseau de distribution d'eau, et par « en aval », on entend du côté des installations d'eau 5.

Chaque compteur d'eau 7 comporte un deuxième module de communication 14 qui lui permet de communiquer avec les passerelles Gj via une communication radio qui utilise ici le protocole LoRa (pour *Long Range*).

Chaque compteur d'eau 7 comporte aussi un deuxième module de traitement 15 comportant au moins un deuxième composant de traitement adapté à exécuter des instructions d'un programme pour mettre en oeuvre certaines étapes du procédé de détection et de localisation d'une fuite d'eau qui vont être décrites ci-après. Le deuxième composant de traitement est par exemple un processeur, un microcontrôleur, ou bien un circuit logique programmable tel qu'un FPGA ou un ASIC.

Chaque compteur d'eau 7 comporte de plus un conduit dans lequel circule l'eau fournie par le réseau de distribution d'eau 1 à l'installation d'eau 5 à laquelle est raccordé le compteur d'eau 7 (ou bien aux installations d'eau 5, dans le cas du compteur principal CCQ), ainsi qu'un dispositif de mesure de la vitesse de l'eau 21.

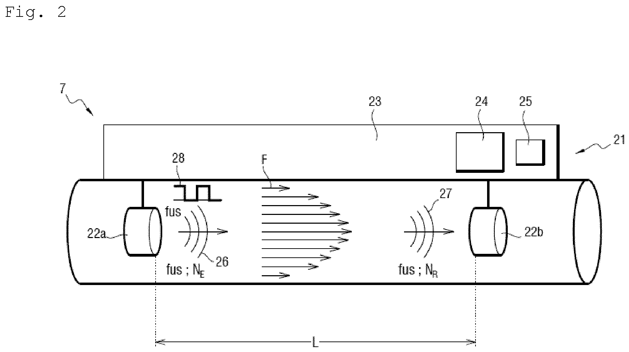

Le dispositif de mesure 21 est visible sur la figure 2.

L'eau circule dans le conduit d'amont en aval, comme cela est indiqué par le sens des flèches F.

Le dispositif de mesure 21 comporte au moins un transducteur, en l'occurrence un transducteur amont 22a et un transducteur aval 22b. Le dispositif de mesure comporte aussi un module de mesure 23 relié au transducteur amont 22a et au transducteur aval 22b.

Le transducteur amont 22a et le transducteur aval 22b sont appairés. Le transducteur amont 22a et le transducteur aval 22b sont ici des transducteurs piézoélectriques.

Le module de mesure 23 comporte un troisième composant de traitement 24, ainsi qu'un convertisseur analogique numérique 25 (éventuellement intégré dans le composant de traitement 24).

Le module de mesure 23 pilote le transducteur amont 22a et le transducteur aval 22b.

Le transducteur amont 22a et le transducteur aval 22b remplissent chacun successivement la fonction d'un émetteur de signaux ultrasoniques de mesure émis 26, et la fonction d'un récepteur de signaux ultrasoniques de mesure reçus 27.

Le module de mesure 23 génère un signal électrique d'excitation 28, et fournit à l'émetteur le signal électrique d'excitation 28.

L'émetteur transforme le signal électrique d'excitation 28 en un signal ultrasonique de mesure émis 26.

Le module de mesure 13 acquiert le signal ultrasonique de mesure reçu 27 qui est reçu par le récepteur.

Le signal électrique d'excitation 28 a pour fréquence fus et pour période Tus. La fréquence fus est classiquement comprise entre 900kHz et 4MHz, et est ici égale à 2MHz. On note que, lorsque le fluide est un gaz et non de l'eau, la fréquence fus est classiquement de l'ordre de quelques dizaines de KHz.

Le signal ultrasonique de mesure émis 26 parcourt ainsi, entre le transducteur amont 22a et le transducteur aval 22b, un trajet de longueur définie L d'amont en aval (puis d'aval en amont pour la mesure où c'est le transducteur 22b qui émet). Le trajet de longueur définie est ici un trajet rectiligne entre le transducteur amont 22a et le transducteur aval 22b.

Sur la figure 2, on a représenté le transducteur amont 22a remplissant la fonction d'un émetteur et le transducteur aval 22b remplissant la fonction d'un récepteur. Le signal électrique d'excitation 28 est donc appliqué en entrée du transducteur amont 22a pour émettre le signal ultrasonique de mesure émis 26. Le signal ultrasonique de mesure émis 26 parcourt donc le trajet de longueur définie L d'amont en aval. Le signal ultrasonique de mesure émis 26 est émis par l'émetteur avec un niveau $N_E$. Le signal ultrasonique de mesure reçu 27 est reçu par le récepteur avec un niveau $N_R$ inférieur au niveau $N_E$.

Le module de mesure 23 acquiert le signal ultrasonique de mesure reçu 27 après qu'il a parcouru dans l'eau le trajet de longueur définie. Le module de mesure 23 numérise le signal ultrasonique de mesure reçu 27 en utilisant le convertisseur analogique numérique 25, et produit des échantillons de mesure. Pour un signal de fréquence fus = 2MHz, la fréquence d'échantillonnage est typiquement de 8MHz afin de respecter le critère de Shannon.

Le module de mesure 23 mesure le temps de trajet mis par le signal ultrasonique de mesure émis 26 pour parcourir le trajet de longueur définie d'amont en aval.

Le module de mesure 23 mesure en réalité un temps de transfert global $T_{AB}$ du transducteur amont 22a vers le transducteur aval 22b.

Le temps de transfert global $T_{AB}$ est tel que :

$$T_{AB} = TA_A + ToF_{AB} + TR_B,$$

où :

- $TA_A$ est un temps d'allumage du transducteur amont 22a ;
- $ToF_{AB}$ correspond au temps de vol (Time of Flight, en anglais) mis par le signal ultrasonique de mesure émis 26 pour parcourir le trajet de longueur définie entre le transducteur amont 22a et le transducteur aval 22b ;
- $TR_B$ est un temps de réception du transducteur aval 22b.

De même, le transducteur aval 22b émet un signal ultrasonique de mesure qui est reçu par le transducteur amont 22a.

Le module de mesure 23 mesure le temps de transfert global $T_{BA}$ qui est tel que :

$$T_{BA} = TA_B + ToF_{BA} + TR_A,$$

où :

- $T_{AB}$ est un temps d'allumage du transducteur aval 22b ;
- $ToF_{BA}$ correspond au temps de vol mis par le signal ultrasonique de mesure pour parcourir le trajet de longueur définie entre le transducteur aval 22b et le transducteur amont 22a ;
- $TR_A$ est un temps de réception du transducteur amont 22a.

En supposant que :
$TA_A = TA_B$ et $TR_A = TR_B$ (transducteurs appairés), on obtient :

$$\Delta T = T_{BA} - T_{AB} = ToF_{BA} - ToF_{AB} = DToF,$$

où DToF est le temps de vol différentiel (*Differential Time of Flight*).

Or, le DToF est proportionnel à la vitesse moyenne du fluide, et le module de mesure 23 calcule alors la vitesse moyenne de l'eau en utilisant le DToF. La vitesse moyenne est signée et peut être positive, négative ou nulle.

Le module de mesure 23 déduit alors de la vitesse moyenne le débit d'eau circulant dans le tuyau.

On décrit maintenant la mise en oeuvre du procédé de détection et de localisation selon l'invention.

Dans chaque compteur d'eau 7, le deuxième module de traitement 15 acquiert des premiers échantillons de mesure qui sont issus de mesures réalisées par le transducteur aval 22b du dispositif de mesure 21 dudit compteur d'eau 7, et qui sont obtenus par la numérisation des signaux ultrasoniques de mesure reçus 27 qui ont été reçus par le transducteur aval 22b.

Les mesures en question ont été réalisées au cours de périodes de détection espacées dans le temps.

Ainsi, en dehors des plages temporelles de mesure du débit, de manière répétée dans le temps, le compteur d'eau 7 se réveille, capture des premiers échantillons de mesure au cours d'une période de détection, puis se rendort.

Les périodes de détection sont définies de sorte que chaque période de détection succède directement à une période préliminaire de durée au moins égale à une durée préliminaire prédéfinie, au cours de laquelle une consommation d'eau mesurée par le compteur d'eau 7 est nulle (ou tout au moins inférieure à un seuil prédéterminé très faible). Les périodes préliminaires sont des périodes de « *zéro-flow* », au cours desquelles la vitesse de l'eau et donc le débit sont nuls.

Chaque période de détection a ici une durée égale à 5 secondes. La durée préliminaire prédéfinie est ici égale à 5 secondes. La fréquence d'échantillonnage d'acquisition des premiers échantillons de mesure est typiquement égale à 50KHz.

Le deuxième module de traitement 15 du compteur d'eau 7 évalue des niveaux de bruit associés chacun à une période de détection distincte. Chaque niveau de bruit est représentatif d'un niveau d'un signal de bruit de fuite contenu dans les premiers échantillons de mesure issus des mesures réalisées par le transducteur aval 22b du compteur d'eau 7 au cours de la période de détection associée. Si une fuite d'eau se produit à proximité du compteur d'eau 7, le niveau de bruit est élevé.

Tous les compteurs d'eau 7 transmettent les niveaux de bruit à un équipement externe, en l'occurrence au SI 6 via les passerelles Gj, en utilisant le protocole LoRa.

Le premier module de traitement 11 du serveur d'application 8 du SI 6 acquiert les niveaux de bruit produits par tous les compteurs d'eau 7.

Puis, pour chaque compteur d'eau 7 et chaque période de détection, le premier module de traitement 11 compare le niveau de bruit de la période de détection avec un seuil de bruit prédéterminé.

Le premier module de traitement 11 détecte une fuite d'eau à proximité du compteur d'eau 7 lorsqu'il détecte au moins un nombre prédéterminé de niveaux de bruit successifs supérieurs au seuil de bruit prédéterminé, lesdits niveaux de bruit correspondant à des périodes de détection espacées dans le temps d'au moins une durée prédéterminée.

Ici, par « un nombre prédéterminé de niveaux de bruit successifs supérieurs au seuil de bruit prédéterminée », on entend qu'aucune période de détection, ayant un niveau de bruit inférieur ou égal au seuil de bruit prédéterminé, n'a été détectée entre les périodes de détection associées auxdits niveaux de bruit successifs.

Ici, par « espacées dans le temps d'au moins une durée prédéterminée », on entend que la durée entre le début de la première de ces périodes de détection successives et la fin de la dernière de ces périodes de détection successives doit être égale au moins à la durée prédéterminée.

Le nombre prédéterminé est ici égal à 3.

La durée prédéterminée est égale à plusieurs heures, par exemple à 5 heures.

Ainsi, le fait qu'un niveau de bruit d'une période de détection soit supérieur au seuil de bruit prédéterminé constitue uniquement une présomption de fuite d'eau (c'est-à-dire un indice).

Pour que le premier module de traitement 11 confirme la présomption de fuite d'eau et détecte effectivement une fuite d'eau à proximité d'un compteur d'eau 7, les conditions suivantes doivent être remplies :

- le premier module de traitement 11 doit détecter au moins trois (nombre prédéterminé) périodes de détection successives dans lesquelles le niveau de bruit est supérieur au seuil de bruit prédéterminé ;
- les trois périodes de détection sont espacées d'au moins 5 heures (durée prédéterminée).

Les conditions qui viennent d'être décrites permettent d'éliminer les bruits de pompe qui pourraient être détectés dans les premiers échantillons de mesure lors de certaines périodes de détection.

Lorsque le premier module de traitement 11 détecte une fuite d'eau à proximité du compteur d'eau 7, le premier module de traitement 11 localise la fuite d'eau dans le réseau de distribution 1 à proximité et en amont dudit compteur d'eau 7 (car la position du transducteur aval 22b lui permet de détecter efficacement une fuite d'eau en amont du compteur 7).

Bien sûr, il est possible que le premier module de traitement 11 détecte une fuite d'eau à proximité de plusieurs compteurs d'eau 7. Il peut s'agir de plusieurs fuites d'eau, ou bien d'une unique fuite détectée grâce aux mesures réalisées par plusieurs compteurs d'eau 7. Le compteur d'eau 7 dont le niveau de bruit est le plus élevé, en longeant la canalisation, est celui pour lequel la fuite d'eau est la plus proche. La proximité d'une fuite est déterminée par le compteur d'eau 7 ayant le plus fort niveau de bruit, sous-région par sous-région du réseau.

Le premier module de traitement 11 peut ainsi localiser les fuites de manière précise, et générer une alarme pour qu'une intervention soit programmée de manière à réparer la conduite ou tout autre élément à l'origine de la fuite.

On décrit maintenant plus en détail la manière dont est évaluée, par le deuxième module de traitement 15 d'un compteur d'eau 7, le niveau de bruit du signal de bruit de fuite au cours d'une période de détection.

On connaît la nature des bruits de fuite. Ceux-ci sont quasi-périodiques et basses fréquences (de 10Hz à quelques centaines de Hz). Les autres bruits sont en général plus hautes fréquences (1 à 2KHz) et sont blancs.

Le deuxième module de traitement 15 acquiert les premiers échantillons de mesure $a_n$ de chaque période de détection, puis applique un filtrage numérique passe-bande sur les échantillons de mesure de ladite période de détection pour obtenir un signal de détection filtré comprenant des premiers échantillons de mesure filtrés.

Le filtrage numérique passe-bande permet d'une part d'éliminer tout *offset,* et d'autre part de ne sélectionner que la bande de fréquence « intéressante » (typiquement comprise entre 10Hz et 400Hz) en rejetant le bruit hors bande.

On obtient en sortie du filtre passe-bande les premiers échantillons de mesure filtrés suivants :

$$S_n = U_n + b_n,$$

où $U_n$ correspond au signal de bruit de fuite « utile » et $b_n$ au bruit blanc indésirable.

Le deuxième module de traitement 15 du compteur d'eau 7 calcule alors une autocorrélation du signal de détection filtré. On sait que la méthode d'autocorrélation permet de sortir une information périodique noyée dans du bruit.

Le niveau de bruit du signal de bruit de fuite est évalué en utilisant la formule :

$$M = MAX \ selon \ k(\textstyle\sum_{n=0}^{R} S_n \times S_{n-k})$$, où M est le niveau de bruit (qui correspond ici à la puissance du signal de bruit de fuite), $S_n$ est le $n^{ième}$ premier échantillon de mesure filtré, $S_{n-k}$ est le $(n-k)^{ième}$ premier échantillon de mesure filtré, et R est un nombre entier qui est inférieur ou égal au nombre de premiers échantillons de mesure de la période de détection (qui est ici égal à 250000, car la période de détection a pour durée 5 secondes et la fréquence d'échantillonnage pour obtenir les premiers échantillons de mesure est égale à 50KHz) .

Le signal $U_n$ étant périodique et le bruit $b_n$ étant un bruit blanc gaussien centré, cette formule permet d'éliminer le bruit $b_n$ et d'en déduire la puissance du bruit de fuite Un.

On s'affranchit ainsi des bruits parasites liés à d'autres causes, par exemple à l'écoulement naturel de l'eau dans un conduit : le procédé de détection et de localisation ne peut pas être leurré dans le cas où le signal de bruit de fuite « utile » est noyé dans le bruit blanc lié à ces autres causes.

Il est important de noter que le procédé de détection et de localisation selon l'invention peut être mis en oeuvre avec les transducteurs (22a, 22b) utilisés par ailleurs par le compteur d'eau pour mesurer la consommation d'eau, et ne nécessite donc pas de transducteur supplémentaire. Le transducteur amont 22a et le transducteur aval 22b sont des transducteurs qui présentent une forte impédance à basses fréquences, ce qui leur permet d'échantillonner à un niveau acceptable les basses fréquences qui sont utiles pour réaliser la détection et la localisation de fuite.

On note aussi qu'il est tout à fait possible, pour mettre en oeuvre le procédé de détection et de localisation selon l'invention, d'utiliser des deuxièmes échantillons de mesure issus des mesures réalisées par le transducteur amont 22a de chaque compteur d'eau 7. Dans ce cas, lorsqu'une fuite d'eau est détectée grâce aux mesures réalisées par le transducteur amont 22a d'un compteur d'eau 7, la fuite d'eau est localisée par le premier module de traitement 11 du serveur d'application 8 du SI 6 dans l'installation d'eau 5 à laquelle est raccordé ledit compteur d'eau 7, en aval dudit compteur d'eau 7.

Bien sûr, le procédé peut être mis en oeuvre en utilisant à la fois les premiers échantillons de mesure et les deuxièmes échantillons de mesure, ce qui améliore la précision de la localisation des fuites d'eau.

Bien entendu, l'invention n'est pas limitée au mode de réalisation décrit mais englobe toute variante entrant dans le champ de l'invention telle que définie par les revendications.

Les communications entre les compteurs, les passerelles et le SI pourraient être réalisées en utilisant tout type de technologie de communication et tout type de protocole.

Toutes ou certaines des étapes qui, dans cette description, sont mises en oeuvre dans le serveur d'application du SI, pourraient être mises en oeuvre dans un serveur quelconque du SI, mais aussi dans une passerelle connectée à des compteurs, ou bien dans un concentrateur de données connecté à des compteurs, ou bien même dans un compteur, et notamment dans un compteur communicant de quartier. De même, certaines étapes qui, dans cette description, sont mises en oeuvre dans les compteurs (et notamment le calcul des niveaux de bruit), pourraient être mises en oeuvre dans d'autres équipements, et par exemple dans un serveur quelconque du SI, mais aussi dans une passerelle connectée aux compteurs, ou bien dans un concentrateur de données connecté aux compteurs.

L'invention pourrait être mise en oeuvre avec des compteurs de fluide autres que des compteurs d'eau : compteurs de pétrole, etc.

**Revendications**

1. Procédé de détection et de localisation d'une fuite de fluide dans un réseau de distribution de fluide (1) comportant une pluralité de compteurs de fluide à ultrason (7) comprenant chacun un transducteur amont (22a) situé du côté du réseau de distribution de fluide (1) et un transducteur aval (22b) situé du côté d'une installation (5) alimentée en fluide par ledit réseau de distribution de fluide, le procédé comportant les étapes, pour chaque compteur de fluide à ultrason (7), de :

    - acquérir ou évaluer des niveaux de bruit associés chacun à une période de détection distincte, chaque niveau de bruit étant représentatif d'un niveau d'un signal de bruit de fuite contenu dans des échantillons de mesure issus de mesures réalisées par le transducteur dudit compteur de fluide à ultrason au cours de la période de détection associée ;
    - comparer chaque niveau de bruit avec un seuil de bruit prédéterminé ;
    - détecter une fuite de fluide à proximité du compteur de fluide à ultrason (7) lorsqu'au moins un nombre prédéterminé de niveaux de bruit successifs supérieurs au seuil de bruit prédéterminé, correspondant à des périodes de détection espacées dans le temps d'au moins une durée prédéterminée, a été détecté ;

le procédé étant tel que les échantillons de mesure utilisés pour mettre en oeuvre ledit procédé comprennent des premiers échantillons de mesure qui sont issus de mesures réalisées par le transducteur aval (22b) dudit compteur de fluide à ultrason ou des deuxièmes échantillons de mesure qui sont issus de mesures réalisées par le transducteur amont (22a) dudit compteur de fluide à ultrason ou encore les premiers échantillons de mesure et les deuxièmes échantillons de mesure, le procédé comprenant en outre l'étape, lorsque ledit procédé est mis en oeuvre avec les premiers échantillons de mesure et qu'une fuite est détectée, de localiser ladite fuite dans le réseau de distribution de fluide (1) en amont dudit compteur de fluide à ultrason (7) ou

le procédé comprenant en outre l'étape, lorsque ledit procédé est mis en oeuvre avec les deuxièmes échantillons de mesure et qu'une fuite est détectée, de localiser ladite fuite dans ladite installation (5) en aval dudit compteur de fluide à ultrason (7) .

2. Procédé selon la revendication 1, dans lequel les périodes de détection sont définies de sorte que chaque période de détection succède directement à une période préliminaire de durée au moins égale à une durée prédéfinie, au cours de laquelle une consommation de fluide mesurée par le compteur de fluide à ultrason (7) est nulle.

3. Procédé selon l'une des revendications précédentes, dans lequel l'évaluation du niveau de bruit pour chaque période de détection comprend les étapes de :

    - appliquer un filtrage numérique passe-bande sur les échantillons de mesure de ladite période de détection pour obtenir un signal de détection filtré comprenant des échantillons de mesure filtrés ;
    - calculer une autocorrélation du signal de détection filtré.

4. Procédé selon la revendication 3, dans lequel le niveau de bruit sur la période de détection est évalué en utilisant la formule :

$$M = MAX\ selon\ k(\sum_{n=0}^{R} S_n \times S_{n-k})$$, où

M est le niveau de bruit, $S_n$ est le $n^{ième}$ échantillon de mesure filtré, $S_{n-k}$ est le $(n-k)^{ième}$ échantillon de mesure filtré, et R est un nombre entier qui est inférieur ou égal au nombre d'échantillons de mesure de la période de détection.

5. Equipement comprenant un premier module de communication (10) et un premier module de traitement (11) agencé pour mettre en oeuvre le procédé selon l'une des revendications précédentes.

6. Equipement selon la revendication 5, l'équipement étant un Système d'Information (6) ou une passerelle ou un concentrateur de données ou un compteur communicant de quartier.

7. Programme d'ordinateur comprenant des instructions qui conduisent l'équipement selon l'une des revendications 5 et 6 à exécuter les étapes du procédé selon l'une des revendications 1 à 4.

8. Support d'enregistrement lisible par ordinateur, sur lequel est enregistré le programme d'ordinateur selon la revendication 7.

**Patentansprüche**

1. Verfahren zur Erkennung und Lokalisierung eines Fluidlecks in einem Fluidverteilungsnetz (1), das eine Vielzahl von Ultraschallfluidzählern (7) umfasst, die jeweils einen stromaufwärtigen Wandler (22a) enthalten, der sich auf der Seite des Fluidverteilungsnetzes (1) befindet, sowie einen stromabwärtigen Wandler (22b), der sich auf der Seite einer Anlage (5) befindet, die von dem genannten Fluidverteilungsnetz mit Fluid versorgt wird, wobei das Verfahren für jeden Ultraschallfluidzähler (7) die Schritte umfasst:

- Erfassen oder Evaluieren von Geräuschpegeln, die jeweils mit einer anderen Erkennungsperiode verbunden sind, wobei jeder Geräuschpegel repräsentativ für einen Pegel eines Leckgeräuschsignals ist, das in Messproben enthalten ist, die von Messungen stammen, die von dem Wandler des genannten Ultraschallfluidzählers während der dazugehörigen Erkennungsperiode durchgeführt werden;
- Vergleichen jedes Geräuschpegels mit einem vorbestimmten Geräuschschwellenwert;
- Erkennen eines Fluidlecks in der Nähe des Ultraschallfluidzählers (7), wenn mindestens eine vorbestimmte Anzahl an aufeinanderfolgenden Geräuschpegeln, die größer als der vorbestimmte Geräuschschwellenwert sind und die Erkennungsperioden entsprechen, die zeitlich um mindestens eine vorbestimmte Dauer beabstandet sind, erkannt wird;
wobei das Verfahren derart ist, dass die Messproben, die zum Durchführen des genannten Verfahrens verwendet werden, erste Messproben umfassen, die von Messungen stammen, die von dem stromabwärtigen Wandler (22b) des genannten Ultraschallfluidzählers durchgeführt werden, oder zweite Messproben, die von Messungen stammen, die von dem stromaufwärtigen Wandler (22a) des genannten Ultraschallfluidzählers durchgeführt werden, oder auch die ersten Messproben und die zweite Messproben, wobei das Verfahren, wenn das genannte Verfahren mit den ersten Messproben durchgeführt wird und wenn ein Leck erkannt wird, ferner den Schritt des Lokalisierens des genannten Lecks in dem Fluidverteilungsnetz (1) stromaufwärts des genannten Ultraschallfluidzählers (7) umfasst,
oder

wobei das Verfahren, wenn das genannte Verfahren mit den zweiten Messproben durchgeführt wird und wenn ein Leck erkannt wird, ferner den Schritt des Lokalisierens des genannten Lecks in der genannten Anlage (5) stromabwärts des genannten Ultraschallfluidzählers (7) umfasst.

2. Verfahren nach Anspruch 1, bei dem die Erkennungsperioden derart definiert sind, dass jede Erkennungsperiode direkt auf eine vorbereitende Periode einer Dauer folgt, die mindestens gleich einer vordefinierten Dauer ist, während der ein von dem Ultraschallfluidzähler (7) gemessener Fluidverbrauch Null ist.

3. Verfahren nach einem der vorhergehenden Ansprüche, bei dem die Evaluierung des Geräuschpegels für jede Erkennungsperiode die Schritte umfasst:

- Anwenden einer digitalen Tiefpassfilterung an den Messproben der genannten Erkennungsperiode, um ein gefiltertes Erkennungssignal zu erhalten, das gefilterte Messproben umfasst;
- Berechnen einer Autokorrelation des gefilterten Erkennungssignals.

4. Verfahren nach Anspruch 3, bei dem der Geräuschpegel über die Erkennungsperiode evaluiert wird, indem die Formel verwendet wird: $M = MAX\ gem$äß $k\left(\sum_{n=0}^{R} S_n\ x\ S_{n-k}\right)$, wobei M der Geräuschpegel ist, $S_n$ die n-te gefilterte Messprobe ist, $S_{n-k}$ die (n-k)-te gefilterte Messprobe ist und R eine ganze Zahl ist, die kleiner oder gleich der Anzahl an Messproben der Erkennungsperiode ist.

5. Ausrüstung, umfassend ein erstes Kommunikationsmodul (10) und ein erstes Verarbeitungsmodul (11), das ausgebildet ist, das Verfahren nach einem der vorhergehenden Ansprüche durchzuführen.

6. Ausrüstung nach Anspruch 5, wobei die Ausrüstung ein Informationssystem (6) oder ein Gateway oder ein Datenkonzentrator oder ein intelligenter Zähler eines Stadtviertels ist.

7. Computerprogramm, umfassend Anweisungen, die die Ausrüstung nach einem der Ansprüche 5 und 6 dazu veranlassen, die Schritte des Verfahrens nach einem der Ansprüche 1 bis 4 auszuführen.

8. Computerlesbarer Aufzeichnungsträger, auf dem das Computerprogramm nach Anspruch 7 gespeichert ist.

**Claims**

1. A method of detecting and locating a fluid leak in a fluid distribution network (1) that comprises a plurality of ultrasonic fluid meters (7), each ultrasonic fluid meter comprising an upstream transducer (22a) situated beside the fluid distribution network (1) and a downstream transducer (22b) situated beside an installation (5) that is fed with fluid by said fluid distribution network, the method comprising, for each ultrasonic fluid meter (7), the following steps:

· acquiring or evaluating noise levels, each associated with a respective different detection period, each noise level being representative of a level of a leakage noise signal contained in measurement samples coming from measurements taken by the transducer of said ultrasonic fluid meter during the associated detection period;
· comparing each noise level with a predetermined noise threshold;
· detecting that a fluid leak is present in the proximity of the ultrasonic fluid meter (7) on detecting at least a predetermined number of successive noise levels that are greater than the predetermined noise threshold and that correspond to detection periods that are spaced apart in time by at least a predetermined duration;
the method being such that the measurement samples used for performing the method comprise first measurement samples that come from measurements taken by the downstream transducer (22b) of said ultrasonic fluid meter or second measurement samples that come from measurements taken by the upstream transducer (22a) of said ultrasonic fluid meter or the first measurement samples and the second measurement samples,
the method further comprising the step, when said method is performed with the first measurement samples and a leak is detected, of locating said leak as being in the fluid distribution network (1) upstream from said ultrasonic fluid meter (7)
or
the method further comprising the step, when said method is performed with the second measurement samples and a leak is detected, of locating said leak as being in said installation (5) downstream from said ultrasonic fluid meter (7).

2. A method according to claim 1, wherein the detection periods are defined in such a manner that each detection period follows directly after a preliminary period of duration not less than a predefined duration, and during which the ultrasonic fluid meter (7) measures a fluid consumption of zero.

3. A method according to any preceding claim, wherein the noise level for each detection period is evaluated by the following steps:

· applying digital bandpass filtering to the measurement samples of said detection period in order to obtain a filtered detection signal comprising filtered measurement samples;
· calculating the autocorrelation of the filtered detection signal.

4. A method according to claim 3, wherein the noise level over the detection period is evaluated by using the following formula:

$$M = \mathrm{MAX} \text{ over } k \left( \sum_{n=0}^{R} S_n \times S_{n-k} \right), \text{ where}$$

M is the noise level, $S_n$ is the $n^{th}$ filtered measurement sample, $S_{n-k}$ is the $(n-k)^{th}$ filtered measurement sample, and R is an integer that is less than or equal to the number of measurement samples of the detection period.

5. Equipment comprising a first communication module (10) and a first processor module (11) arranged to perform the method according to any preceding claim.

6. Equipment according to claim 5, the equipment being an information system (6), or a gateway, or a data concentrator, or a district smart meter.

7. A computer program including instructions for causing the equipment according to claim 5 or claim 6, to execute the steps of the method according to any one of claims 1 to 4.

8. A computer readable storage medium having stored thereon the computer program according to claim 7.

Fig. 1

Fig. 2

**EP 3 892 976 B1**

## RÉFÉRENCES CITÉES DANS LA DESCRIPTION

### Documents brevets cités dans la description

- EP 3236227 A2
- WO 2017005269 A1